# EUROPEAN PATENT SPECIFICATION

(11) **EP 4 122 096 B1**
(45) Date of publication and mention of the grant of the patent: **06.03.2024**
(21) Application number: 21720020.3
(22) Date of filing: 19.03.2021
(51) Int. Cl.: H02S 20/00, H02S 40/10, H02S 40/42

(54) **A FLOATING SOLAR POWER PLANT**
SCHWIMMENDES SOLARKRAFTWERK
CENTRALE SOLAIRE FLOTTANTE

(30) Priority: 20.03.2020 NO 20200336
(43) Date of publication of application: 25.01.2023
(73) Proprietor: Helset, Bjørn, 6154 Ørsta (NO)
(72) Inventor: Helset, Bjørn, 6154 Ørsta (NO)
(74) Representative: AWA Norway AS
(86) International application number: PCT/NO2021/050070
(87) International publication number: WO 2021/187993

(56) References cited:
- WO-A1-2010/026542
- CA-A1- 2 463 842
- US-A1- 2014 290 721
- US-A1- 2019 131 919
- US-B2- 10 141 885

## Description

### Field of the Invention

The present invention relates to a solar cell powerplant for generating photovoltaic energy, wherein the powerplant is adapted to float on water.

### Background

Aquaculture installations are often located in sparsely populated areas along the coast wherein it becomes too costly to bring forth powerlines with electricity. Alternatives that are commonly utilized are diesel-powered power generators. This is a non-environmentally friendly solution that also requires regular maintenance and supply of diesel.

From NO343405 it is known a solution wherein electricity is provided from rafts with solar cell panels floating on the sea. The solar cells are naturally cooled by the water. A study conducted by the company ABB states that the natural cooling effect from the water underneath the panels makes the solar cells up to eleven percent more efficient than on comparable solutions for use on land.

A disadvantage of such plants is that they have to be cleaned frequently due to fouling, algae build-up, which thrives in saline water. In addition, salt crystals will precipitate and settle on the solar cell panels. The efficiency of the solar panels will be greatly reduced.

It is worth mentioning technologies and systems described in the following known patent documents: US 2012/0242275 describing a mobile solar cell ocean farm system, US 2015/0162866A1 describing a support device for solar cell panels, KR 101612832 B describing a solar cell device on a floating structure, and NO 343405 B1 describing a method for building a buoyant solar cell system.

From DE 19908645 A1 it is known a floating solar cell installation wherein the solar cells are attached between two foils. In the resulting mat, bamboo sticks are attached which covers the mat and ensure buoyancy.

Document US 2019/131919 A1 discloses a floating solar power plant with a buoyant element and a canvas.

### Summary of the Invention

It is the object of the present invention to provide a solar cell plant requiring less maintenance. Another object is to reuse surplus equipment from aquaculture installations.

This is achieved with a solar cell powerplant according to the appended claims.

### Brief Description of the Drawings

Certain features and functions of the present invention are shown in the following detailed description, wherein the invention will be described reference to the following appended figures, in which:
Fig. 1, illustrating a complete installation seen from above.
Fig. 2, illustrating an assembly of a part.
Fig. 3, illustrating a cross-section of the installation seen from the side.

### Detailed Description of the Invention

The powerplant according to the invention comprise an assembly with a buoyant element surrounding a first canvas/bottom canvas, that is intended to float in a body of seawater. In this structure it is provided a plurality of pools that contains clean/fresh/non-saline water, preferably rainwater. In the pool or pools lies solar cell panels providing electric power. The intention with this assembly is that the solar cell panels are cooled by the body of water underneath but lies in fresh water which prevents fouling. The first canvas forms a barrier between the salt seawater and the clean rainwater, while still maintaining good thermal contact against the body of water underneath.

The invention is in an execution that is founded upon a technical integration in buoyant elements that is used in the aquaculture industry. Mainly these buoyant elements are circular in shape and preferably with a circumference spanning up to 120 meters, but the system can be adapted to all shapes and sizes. The invention further comprises of solar cell panels attached on the topside of a canvas, which is a third canvas in the assembly, in a specific pattern optimally positioned in relation to the space utilization within the said buoyant element.

Each buoyant element houses several solar cell elements that each houses a third canvas with attached solar cell panels. Usually, the buoyant element will house four of the said solar cell elements, but it is not limited to this assembly. These elements are attached together on opposite sides and are attached to said buoyant element on the sides that are facing the buoyant elements. Combined this provides a stable and flexible assembly which prevents the device against unnecessary wear and tear of both the third canvas and the support elements.

Solar cell panels are joined with a special adhesive to said third canvas, wherein the third canvas comprise of a canvas that is lowered down in an open shallow pool containing freshwater, wherein the source is either non-saline water, e.g., rainwater, or refill from a non-saline water tank. The said pool is limited in the extent of a plane lying structure. The pool will be filled up with rainwater. Surplus rainwater can be transferred over to a reservoir tank and be returned to the pool as found necessary to maintain the water level in the pool, or to ensure that the water in the pool have low salinity. This reservoir tank can if preferred be embodied by an additional fourth canvas (not shown) that is positioned underneath the first canvas and forms a cavity underneath the buoyant element.

The rainwater/non-saline water that the third canvas is submerged in ensures also that the canvas' topside is less disposed for contamination such as bird feces or similar. However, due to the pool has an open topside the pool water will be provided saline seawater to a certain degree. Particularly at rough seas or storms saltwater will be added in the pools. The salinity will be registered by sensors set in the pool, that will at a predetermined salinity level leads to an alarm which in turn initiates the circulation pumps that provides the actual pool new non-saline water (from the above-mentioned reservoir tank). The sensors can be of a generic commercial type that measures the conductivity of the water.

There will also be installed level sensors in all pools that transmits signals to a microcontroller when the level is beneath a minimum level that then generates an alarm which in turn initiates said circulation pumps that fills up the actual pool with new freshwater to a preferred predetermined level. The freshwater is retrieved from the said reservoir tank.

The support elements can be formed as cases or boxes wherein all, or parts of the elements around the third canvas contains the batteries and technology related to production and storing of energy. Typically, this said construction will have a square or rectangular cross-section, but it can otherwise be in any suitable form.

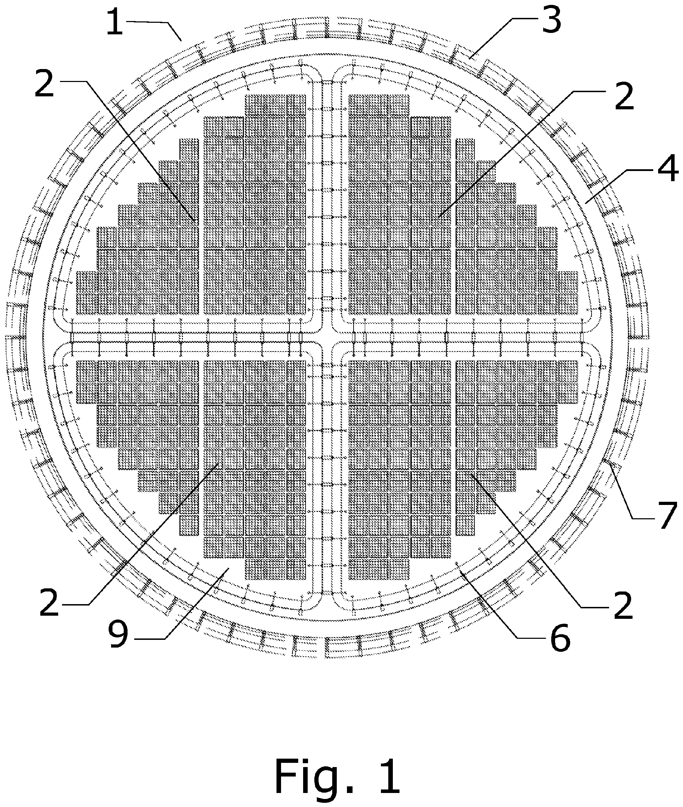

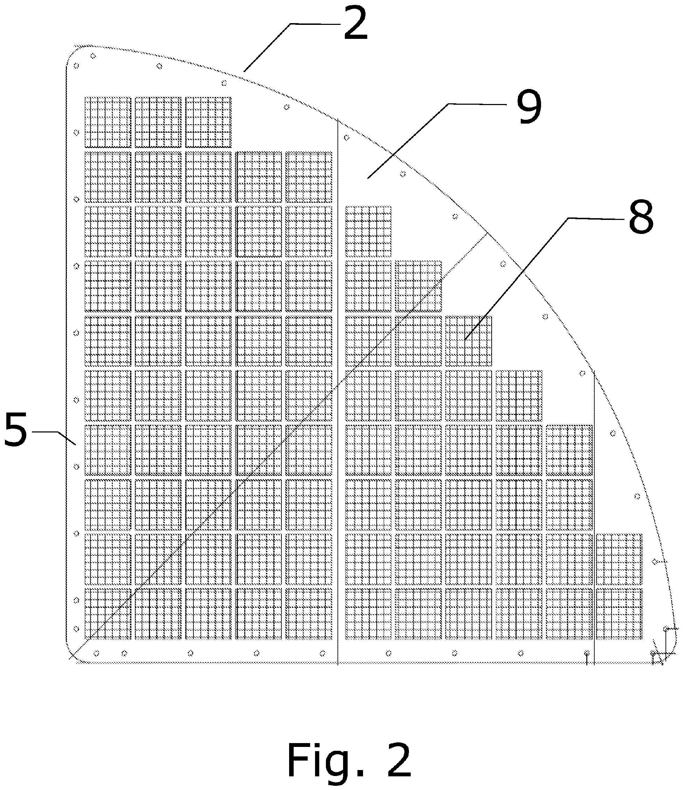

Figure 1 and 2 shows a preferred embodiment of the invention comprising a solar cell installation 1, housing four solar cell elements 2 wherein these comprise of solar cell panels 8 that are firmly joined to a third canvas 9 which in turn is connected with straps to a frame 5 that forms a pool edge that surrounds the third canvas 9. The said four solar cell elements 2 are all connected together with straps 6 on the sides facing against each other and each connected with straps 7 to circumferential substructure in the form of a buoyant element 3 and forms a closed area preventing seawater to enter through and into the solar cell elements 2. Together the buoyant element 3, the first canvas 4 and the frame 5 forms a buoyant platform that houses several pools that is filled with freshwater that completely covers the solar cell panels 2 and ensures preferred cooling of the said solar cells, as well as preventing contaminations adhere to the said solar cells.

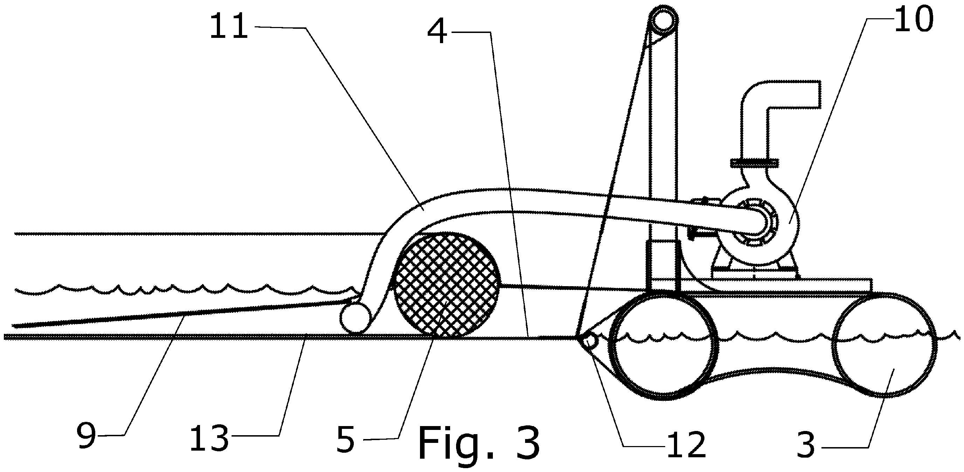

Figure 3 shows the solar cell installation 1 in the preferred embodiment wherein a circulation pump 10 is positioned on a platform attached to the buoyant element 3. The circulation pump 10 is connected to the above-mentioned reservoir tank (not shown). Furthermore, it is shown that the frame 5 that contains the third canvas 9 lying on the said second canvas 13 wherein the transition between the frame 5 and the second canvas 13 forms a seal preventing saltwater to enter beneath and the freshwater to leak in the same direction.

In combination with a data processing system that includes a water level sensors and sensors for measuring of salinity content in the water ensures the pump system a correct predetermined water quality and correct water level in the said pool.

This construction ensures that the solar cell panels receive sufficient cooling from the underlying seawater body, at the same time preventing the unfortunate effects of the seawater. This makes it more applicable to use floating solar cell powerplant also at sea.

The figures show the preferred embodiment of the invention. By using a pool positioned on top of the first canvas within the buoyant element one will be able to walk upon the first canvas between the pools and access the solar cell elements. It will be simpler to execute maintenance on the solar cell panes. It must therefore be available a pump device allowing to keep area between the pools dry. It is, however, also possible to conceive a simpler embodiment, wherein one removes the inner pools and mount the solar cell elements directly on the buoyant elements, even though one loose most of the accessibility to the solar cell elements.

## Claims

1. A floating solar power plant (1) comprising:
- at least one buoyant element (3) surrounding the solar power plant (1) wherein the buoyant element provides buoyancy and attachment of the solar power plant,
- a first canvas (4) covering all of the area surrounded by the buoyant element (3), that is affixed to said buoyant element (3) and forms a saltwater barrier,
**characterized in that**
- a plurality of solar cell elements joined with a third canvas (9) that is positioned within the buoyant element (3), wherein the area within the buoyant element (3) and above the first canvas (4) comprise non-saline water, wherein the plurality of solar cell elements and the third canvas (9) are submerged in the non-saline water.

2. A floating solar power plant (1), according to claim 1 further comprising
- a plurality of pools (2) that is positioned on the first canvas (4), each includes a frame (5) and a second canvas (13) that forms the bottom in the pool (2), wherein the solar cell elements are attached to the frame (5) and is positioned in the pool (2), wherein the pool (2) comprises non-saline water.

3. A floating solar power plant (1), according to claim 1 or 2, further comprising sensors determining the salinity in the water in the area within the buoyant element or in the pool, as well as pumps (10) for supply of non-saline water if the salinity exceeds a predetermined value.

4. A floating solar power plant (1), according to claim 3, further comprising level sensors to monitor the level of non-saline water in the area within the buoyant element or the pool, and that is adapted to start said pumps (10) for the supply of non-saline water in case the level goes below a predetermined value.

5. A floating solar power plant (1), according to any of the previous claims, further comprising a battery pack for storage of electric power from each solar cell element (2).

## Patentansprüche

1. Schwimmendes Solarkraftwerk (1), umfassend:
- mindestens ein das Solarkraftwerk (1) umgebendes Auftriebselement (3), wobei das Auftriebselement Auftrieb und Befestigung des Solarkraftwerks vorsieht,
- eine erste Plane (4), die den gesamten durch das schwimmende Element (3) umgebenen Bereich abdeckt, der an dem schwimmenden Element (3) befestigt ist und eine Salzwasserbarriere bildet,
**dadurch gekennzeichnet, dass**
- eine Vielzahl von Solarzellenelementen, die mit einer dritten Plane (9) verbunden sind, die innerhalb des schwimmenden Elements (3) angeordnet ist, wobei der Bereich innerhalb des schwimmenden Elements (3) und oberhalb der ersten Plane (4) nicht-salzhaltiges Wasser umfasst, wobei die Vielzahl von Solarzellenelementen und die dritte Plane (9) in das nicht-salzhaltige Wasser eingetaucht sind.

2. Schwimmendes Solarkraftwerk (1) gemäß Anspruch 1, ferner umfassend:
- eine Vielzahl von Becken (2), die auf der ersten Plane (4) angeordnet sind, wobei jede einen Rahmen (5) und eine zweite Plane (13) enthält, die den Boden in dem Becken (2) bildet, wobei die Solarzellenelemente an dem Rahmen (5) angebracht und in dem Becken (2) angeordnet sind, wobei das Becken (2) nicht-salzhaltiges Wasser umfasst.

3. Schwimmendes Solarkraftwerk (1) gemäß Anspruch 1 oder 2, ferner umfassend Sensoren, die den Salzgehalt im Wasser im Bereich innerhalb des schwimmenden Elements oder im Becken bestimmen, sowie Pumpen (10) zur Zufuhr von nicht salzhaltigem Wasser, wenn der Salzgehalt einen vorbestimmten Wert überschreitet.

4. Schwimmendes Solarkraftwerk (1) gemäß Anspruch 3, ferner umfassend Füllstandssensoren zum Überwachen des Füllstands von nicht-salzhaltigem Wasser in dem Bereich innerhalb des schwimmenden Elements oder des Beckens, und das dazu eingerichtet ist, die Pumpen (10) für die Zufuhr von nicht-salzhaltigem Wasser in Betrieb zu nehmen, falls der Füllstand unter einen vorbestimmten Wert fällt.

5. Schwimmendes Solarkraftwerk (1) gemäß einem der vorhergehenden Ansprüche, ferner umfassend ein Akkupack zur Speicherung der elektrischen Leistung aus jedem Solarzellenelement (2).

## Revendications

1. Centrale électrique solaire flottante (1), comprenant :
- au moins un élément flottant (3) entourant la centrale électrique solaire (1), dans laquelle l'élément flottant fournit une flottabilité et l'attache de la centrale électrique solaire,
- une première toile (4) couvrant la totalité de la zone entourée par l'élément flottant (3), qui est fixée audit élément flottant (3) et forme une barrière contre l'eau salée,
**caractérisée en ce que**
- une pluralité d'éléments cellules solaires sont joints à une troisième toile (9), qui est positionnée à l'intérieur de l'élément flottant (3), dans laquelle la zone à l'intérieur de l'élément flottant (3) et au-dessus de la première toile (4) comprend de l'eau non salée, dans laquelle la pluralité d'éléments cellules solaires et la troisième toile (9) sont immergés dans l'eau non salée.

2. Centrale électrique solaire flottante (1) selon la revendication 1, comprenant en outre
- une pluralité de bassins (2), qui est positionnée sur la première toile (4), chacun inclut un cadre (5) et une deuxième toile (13) qui forme le fond dans le bassin (2), dans laquelle les éléments cellules solaires sont attachés au cadre (5) et sont positionnés dans le bassin (2), dans laquelle le bassin (2) comprend de l'eau non salée.

3. Centrale électrique solaire flottante (1) selon la revendication 1 ou 2, comprenant en outre des capteurs déterminant la salinité dans l'eau dans la zone à l'intérieur de l'élément flottant ou dans le bassin, ainsi que des pompes (10) pour l'alimentation en eau non salée si la salinité dépasse une valeur prédéterminée.

4. Centrale électrique solaire flottante (1) selon la revendication 3, comprenant en outre des capteurs de niveau pour surveiller le niveau d'eau non salée dans la zone à l'intérieur de l'élément flottant ou le bassin, et qui sont adaptés pour démarrer lesdites pompes (10) pour l'alimentation en eau non salée au cas où le niveau est en dessous d'une valeur prédéterminée.

5. Centrale électrique solaire flottante (1) selon l'une quelconque des revendications précédentes, comprenant en outre un bloc batterie pour le stockage d'énergie électrique provenant de chaque élément cellule solaire (2).
